# EUROPÄISCHE PATENTANMELDUNG

(11) **EP 1 052 505 A1**
(43) Veröffentlichungstag der Anmeldung: **15.11.2000**
(21) Anmeldenummer: 99810420.2
(22) Anmeldetag: 11.05.1999
(51) Int. Cl.: G01N 27/90

(54) **Verfahren zur Oberflächenuntersuchung an einem, wenigstens eine elektrisch leitfähige Schicht aufweisenden Prüfgut**

(71) Anmelder: Asea Brown Boveri AG, 5401 Baden (CH)
(72) Erfinder: Schmidt, Robert, 79761 Waldshut-Tiengen (DE); Scholz, Arthur, 5430 Wettingen (CH); Weber, Patrick, 5301 Station Siggenthal (CH)
(74) Vertreter: Pöpper, Evamaria, Dr.

(57) **Zusammenfassung**

Beschrieben wird ein Verfahren zur Oberflächenuntersuchung an einem, wenigstens eine elektrisch leitfähige Schicht aufweisenden Prüfgut unter Verwendung eines Wirbelstromsensors, der ein magnetisches Wechselfeld erzeugt, dem das Prüfgut ausgesetzt wird, und dessen Meßsignale einer Auswerteeinheit zugeleitet werden.

Die Erfindung zeichnet sich dadurch aus, daß der Wirbelstromsensor auf die Oberfläche des Prüfguts aufgesetzt und von der Oberfläche des Prüfgutes abgehoben wird, und daß die während des Aufsetz- und/oder des Abhebevorganges am Wirbelstromsensor auftretenden Meßsignale in der Auswerteeinheit zur weiteren Verarbeitung gespeichert und zur Auswertung herangezogen werden.

## Beschreibung

### Technisches Gebiet

Die Erfindung bezieht sich auf eine Verfahren gemäß dem Oberbegriff des Anspruchs 1.

### Stand der Technik

Auf dem Gebiet der zerstörungsfreien Materialuntersuchung stellen Wirbelstromverfahren gängige Untersuchungsmethoden dar, mit denen elektrisch leitfähige Werkstoffe, aus denen Prüfgüter mit den unterschiedlichsten Raumformen und Geometrien hergestellt sind, untersucht werden können. Von besonderem Interesse ist hierbei die Oberflächenuntersuchung von Turbinenschaufeln, die zu den wesentlichen Bestandteilen moderner Gasturbinenanlagen zählen und über kompliziert geformte Oberflächenkonturen mit zum Teil hohen Krümmungsradien aufweisen. Ebendiese Bauteile gilt es mittels zerstörungsfreien Materialuntersuchungsmethoden auf ihre Oberflächengüte hin zu untersuchen.

Aus der Vielzahl der auf dem Gebiet der Wirbelstromtechnik publizierten Veröffentlichungen sei auf die EP 0 618 445 A2 verwiesen, die ein Verfahren sowie eine Prüfsonde zum zerstörungsfreien Untersuchen von Oberflächen elektrisch leitfähiger Werkstoffe beschreibt. Das der Wirbelstromtechnik zugrundeliegende Prinzip ist die elektromagnetische Wechselwirkung zwischen einem mit wenigstens einer Spule bestückten Wirbelstromsensor und dem zu untersuchenden Prüfgut, das mit wenigstens einer elektrisch leitfähigen Schicht überzogen ist. Zur Auswertung der an einem Wirbelstromsensor anliegenden Meßsignale dient vorzugsweise eine vektorielle Zerlegung der elektrischen Meßsignale in zwei Komponenten, wie es auch in der deutschen Offenlegungsschrift DE 33 13 820 A1 beschrieben ist. Durch geeignete Kalibrierung der von dem Wirbelstromsensor herrührenden Meßsignale unter Verwendung geeigneter Teststücke mit bekannten Materialeigenschaften, ist es möglich, Aussagen über die Härte, Dicke und/oder über den Gefügezustand einer zu untersuchenden Oberflächenschicht eines Prüfgutes treffen zu können. Hierbei wird von dem an sich bekannten Zusammenhang zwischen der Eindringtiefe des von der Spule erzeugten magnetischen Wechselfeldes, der Spuleninduktivität und der Härte bzw. des Gefügezustandes des zu untersuchen den Materials Gebrauch gemacht.

Die Aussagequalität der mit Wirbelstromsensoren erzielbaren Meßsignalen wird jedoch erheblich durch die Veränderlichkeit der Meßanordnung zwischen dem Wirbelstromsensor und der zu untersuchenden Prüfgutoberfläche nachhaltig beeinträchtigt, so daß bereits ungewollte Relativbewegungen zwischen dem Wirbelstromsensor und dem Prüfgut, beispielsweise bereits bedingt durch eine gekrümmte Oberflächenkontur des Prüfgutes, wesentliche Störquellen darstellen.

Ein spezielles Problem stellt die Schichtdickenmessung an metallischen Schichten dar, die auf einem Trägerwerkstoff aufgebracht sind und über elektrische Leitfähigkeiten verfügen, die sich nur in geringem Maße von der elektrischen Leitfähigkeit des Trägerwerkstoffes unterscheiden. Mit dem bisher bekannten Vorgehen bei der Meßwerterfassung unter Verwendung von Wirbelstromsensoren, bei dem der Sensor auf die Oberfläche aufgesetzt wird und die Meßsignalaufnahme in der Regel kontinuierlich erfolgt, ist bei Leitfähigkeitsunterschieden von weniger als 25% eine akzeptable Meßgenauigkeit in der Regel nicht mehr erreichbar. Derartig geringe Leitfähigkeitsunterschiede treten jedoch häufig bei austenitischen Werkstoffkombinationen auf, die zunehmend bei der Herstellung von Turbinenschaufeln Verwendung finden.

Grund für die mangelnde Meßgenauigkeit sind die nur relativ kleinen Meßsignale im Verhältnis zu den obengenannten Störeinflüssen, die sich aus den sich ändernden Meßgeometrien zusammensetzen und zu einem schlechten Nutz-/Störverhältnis führen.

Ferner treten bei der Oberflächenprüfung von Prüfgütern mit stark variierender Oberflächenkontur, beispielsweise bei den vorstehend genannten Turbinenschaufeln, ein erheblicher zusätzlicher Aufwand für die Kalibrierung sowie für die Signalauswertung auf, was schließlich hohe Anforderungen an die Präzision der gesamten Prüfausrüstung sowie an die Qualifikation des Prüfpersonals zur Folge hat.

Derzeit sind keine industriellen einsetzbaren Methoden zur zuverlässigen Schichtdikkenmessung bzw. Qualitätsprüfung von technischen Oberflächen bekannt, die die Überprüfung von kompliziert konstruierten Prüfgütern, beispielsweise Turbinenschaufeln, mit einer zuverlässigen Meßgenauigkeit ermöglichen.

### Darstellung der Erfindung

Der Erfindung liegt die Aufgabe zugrunde, ein Verfahren zur Oberflächenuntersuchung an einem, wenigstens eine elektrisch leitfähige Schicht aufweisenden Prüfgut unter Verwendung eines Wirbelstromsensors, der ein magnetisches Wechselfeld erzeugt, dem das Prüfgut ausgesetzt wird und dessen Meßsignale einer Auswerteeinheit zugeleitet werden, derart weiterzubilden, daß die zum Stand der Technik vorstehend genannten Nachteile vermieden werden sollen. Es soll insbesondere erreicht werden, daß das Ausmaß der bei der Durchführung des Wirbelstromverfahrens auf die Meßsignale einwirkenden Störungen, bedingt durch die ständigen Geometrieänderungen zwischen dem Prüfstück und dem Wirbelstromsensor, durch geeignete Maßnahmen derart unterdrückt werden sollen, daß die zu erfassenden Nutzsignale, beispielsweise für den Nachweis von Rissen innerhalb des Prüfgutes oder der Erfassung der Dicke von Schutzschichten, im Störuntergrund erkannt werden sollen. Das erfindungsgemäße Verfahren soll insbesondere für den industriellen Einsatz zur Überprüfung technischer Oberflächen geeignet sein.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche.

Das Verfahren gemäß dem Oberbegriff des Anspruchs 1 ist erfindungsgemäß dadurch weitergebildet, daß der Wirbelstromsensor auf die Oberfläche des Prüfguts aufgesetzt und von der Oberfläche des Prüfguts abgehoben wird und daß die während des Aufsetz- und/oder des Abhebevorganges am Wirbelstromsensor auftretenden Meßsignale in der Auswerteeinheit zur weiteren Verarbeitung gespeichert und zur Auswertung herangezogen werden.

Der Erfindung liegt die Idee zugrunde, aus der Vielzahl der bei einer Durchführung einer Oberflächenmessung mit Hilfe eines Wirbelstromsensors anfallenden Meßsignale gerade jene zur Auswertung heranzuziehen, die möglichst nur geringen oder bestenfalls keinen Störeinflüssen, die die Aussagequalität der Meßsignale erheblich zu beeinträchtigen vermögen, unterliegen. In an sich bekannter Weise wird zur Durchführung einer Messung mit einem Wirbelstromsensor dieser auf die zu vermessende Oberfläche des Prüfgutes abgesetzt und lateral zur Oberfläche auf dieser zu Zwecken der Meßsignalerfassung verschoben, bis der Sensor wieder von der Oberfläche des Prüfgutes abgehoben wird. Wie eingangs zum Stand der Technik näher ausgeführt, unterliegt der Wirbelstromsensor - gleichgültig ob er manuell oder automatisch entlang der Oberfläche geführt wird - statistisch verteilten Kippbewegungen, die nicht zuletzt durch das Krümmungsverhalten der Oberfläche des Prüfgutes verursacht werden, wodurch die Meßsignale erhebliche Störungen erfahren. Um den Einfluß derartiger Störungen weitgehend ausschließen zu können, ist erfindungsgemäß erkannt worden, die für die Oberflächenbeschaffenheit des Prüfgutes bzw. für die Schichtdickenmessung jene Meßsignale heranzuziehen, die während des Absenk- und/oder Abhebevorganges des Wirbelstromsensors auf bzw. von der Oberfläche des Prüfgutes durch den Wirbelstromsensor hervorgerufen werden.

Grundsätzlich umfaßt der Aufsetzvorgang jenen Bewegungsablauf des Wirbelstromsensors, der von einer entfernten Beabstandung zur Oberfläche des Prüfgutes, bei der der Wirbelstromsensor eine nachweisbare Wechselwirkung zwischen dem von diesen hervorgerufenen magnetischen Wechselfeld mit der elektrisch leitfähigen Schicht im Prüfgut in Form eines auswertbaren Meßsignals anzeigt, bis hin zur unmittelbaren Kontaktierung des Sensors mit der Oberfläche des Prüfgutes reicht. Im entsprechend umgekehrten Sinne ist auch der Abhebevorgang zu verstehen.

Selbstverständlich liefert der Wirbelstromsensor während der gesamten Durchführung einer Oberflächenmessung an einem Prüfgut Meßsignale, die sowohl während des Absetz- und Abhebevorganges als auch während der Bewegung des Sensors entlang der Oberfläche des Prüfgutes von diesem abgegeben werden. Um aus der Gesamtheit aller Meßsignale eben jene herauszugreifen, die für die Meßsignalauswertung heranzuziehen sind und aus den vorstehend genannten Vorgängen des Absetzens und Abhebens des Wirbelstromsensors stammen, wird der Wirbelstromsensor getriggert betrieben, wodurch durch geeignet gewählte Start- und Stop-Triggersignale die für die Meßsignalauswertung relevanten Meßsignale gefenstert werden können, d.h. in bestimmte Meßsignalintervalle unterteilt werden.

Auch ist es zudem möglich, mit Hilfe geeigneter, die räumliche Relativlage des Wirbelstromsensors zur Oberfläche des Prüfgutes erfassende Sensoren die räumlichen Grenzen für die Meßsignalerfassung festzulegen. Immer dann, wenn sich der Wirbelstromsensor in einer geeigneten räumlichen Lage bzw. in einem definierten Abstand bzw. Abstandsbereich gegenüber der Oberfläche des Prüfgutes befindet, sind eben diese Meßsignale heranzuziehen. Aus Gründen der Auswertestatistik sollte der Wirbelstromsensor ausreichend oft den erforderlichen räumlichen Abstand bzw. den für die Meßsignalerfassung günstigen Abstandsbereich durchlaufen. Dies kann grundsätzlich automatisch bzw. mechanisiert, aber auch manuell durchgeführt werden.

Zur Erfassung der richtigen räumlichen Lage des Wirbelstromsensors relativ zur Oberfläche des Prüfgutes sind eine Reihe bekannter ortsauflösender Sensorsysteme geeignet, wie beispielsweise Lichtschrankensystem, Ultraschallabstandsmeßsystem, Triangulationsmeßverfahren, um nur einige zu nennen. Auch ist es möglich, daß die für die Meßbereichseingrenzung erforderlichen Auslöse- bzw. Triggersignale vom Sondensignal des Wirbelstromsensors selbst abgeleitet werden können. Mit einer geeigneten Kalibrierung können die vom Wirbelstromsensor herrührenden Meßsignale selbst zur Abstandsbestimmung herangezogen werden.

Die Auswertung und Interpretation der von dem Wirbelstromsensor abgegebenen Meßsignale erfolgt vorzugsweise durch Zerlegung des Meßsignals in zwei Komponenten, die innerhalb einer komplexen Darstellungsebene die Darstellung eines Signalvektors, beispielsweise als komplexe Spannung oder komplexer Widerstand, ermöglichen. Bezüglich weiterer Detaildarstellungen zur Auswertung der erfindungsgemäß erhaltenen Meßsignale wird auf die Beschreibung unter Bezugnahme auf die nachstehenden Figuren verwiesen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: schematisierte Blockbilddarstellung einer Meßanordnung mit einem Wirbelstromsensor,
- Fig. 2a, b: schematisierte Darstellung des Bewegungsablaufes eines Absetzvorganges mit einem Wirbelstromsensor, sowie
- Fig. 3a, b, c: Darstellung des Bewegungsablaufes eines Wirbelstromsensors entlang der Oberfläche eines Prüfgutes sowie Darstellung der auf diese Weise aufgenommenen Meßsignale in komplexer Darstellung.

### Wege zur Ausführung der Erfindung, gewerbliche Verwendbarkeit

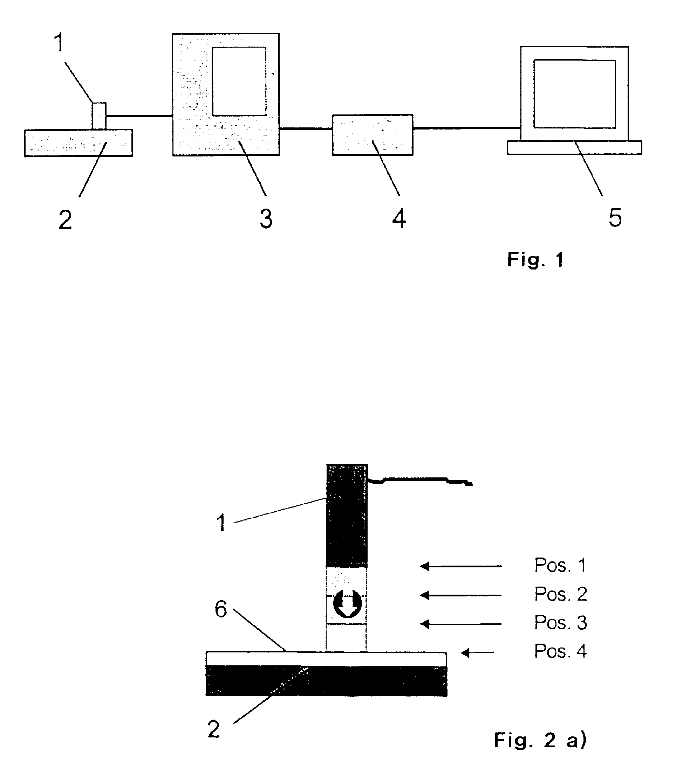

In Fig. 1 ist eine Meßanordnung zur Durchführung des obenstehend beschriebenen Verfahrens dargestellt. Ein Wirbelstromsensor 1 ist auf die Oberfläche eines Prüfgutes 2 aufgesetzt. Der Wirbelstromsensor 1 ist mit einem Wirbelstromgerät 3 verbunden, das den Wirbelstromsensor 1 mit der für die Erzeugung des magnetischen Wechselfeldes erforderlichen Energie versorgt. Überdies ist das Wirbelstromgerät 3 über einen triggerbaren A/D-Wandler 4 mit einem Rechner 5 verbunden, über den das Wirbelstromgerät 3 undd/oder der A/D-Wandler die für die Signaltriggierung erforderliche Trigger-Information erhält. Die Funktion des triggerbaren A/D-Wandlers 4 kann teilweise oder vollkommen im Wirbelstromgerät 3 oder im Rechner 5 integriert sein. Der Rechner 5 ist überdies für die Messsignalauswertung vorgesehen.

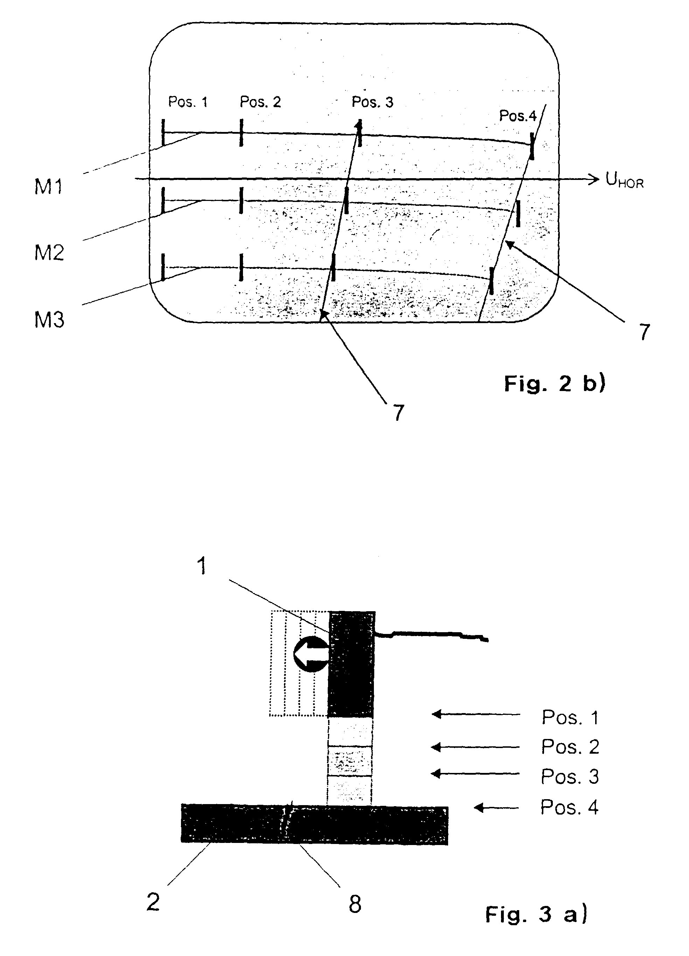

In Fig. 2a ist schematisiert ein Sensor 1 dargestellt, der über Zwischenpositionen Pos.1, Pos. 2, Pos. 3 und Pos. 4 auf die Oberfläche eines Prüfgutes 2 abgesetzt wird. Auf der Oberfläche des Prüfgutes 2 befindet sich eine elektrisch leitfähige Schicht 6, deren Schichtdicke es beispielsweise zu messen gilt.

In Fig. 2b sind Meßsignalverläufe M1, M2, M3 von Absetzvorgängen dargestellt, die bei Prüfgütern mit unterschiedlichen Schichtdicken durchgeführt worden sind. Die Meßsignalverläufe sind dabei in ein Koordinatensystem eingetragen, entlang dessen Abszisse die horizontale Spannungskomponente und auf die Ordinate die vertikale Spannungskomponente eines in zwei Komponenten aufgeteilten Meßsignals aufgetragen sind. Die entlang eines Meßsignalverlaufes eingetragenen Position 1, Position 2, Position 3 und Position 4 entsprechen den in Fig. 2a dargestellten Beabstandungen des Wirbelstromsensors 1 zur Oberfläche des Prüfgutes 2. Die drei unterschiedlichen Meßsignalkurven M1, M2 und M3 in der komplexen Darstellungsebene werden auch als Signalortskurven bezeichnet, die sich aus der Relativbewegung zwischen dem Wirbelstromsensor 1 und dem Prüfgut 2 ergeben. Zur Auswertung der einzelnen Signalortskurven werden Orte gleicher Beabstandung des Wirbelstromsensors 2 von der Oberfläche des Prüfgutes 1 miteinander verbunden, wodurch sich die sogenannten Auswertelinien 7 bilden.

Der Ordinatenwert der Kreuzungspunkte zwischen einer gewählten Auswertelinie 7 mit den schichtdickenabhängigen Signalverläufen, z.B. M1 bis M3, ist eine Funktion der gesuchten Schichtdicke, unabhängig davon, ob wegen des Oberflächenzustandes am Prüfgut die Auswertelinie zu Position 4 in Figur 2a überhaupt erreicht werden kann.

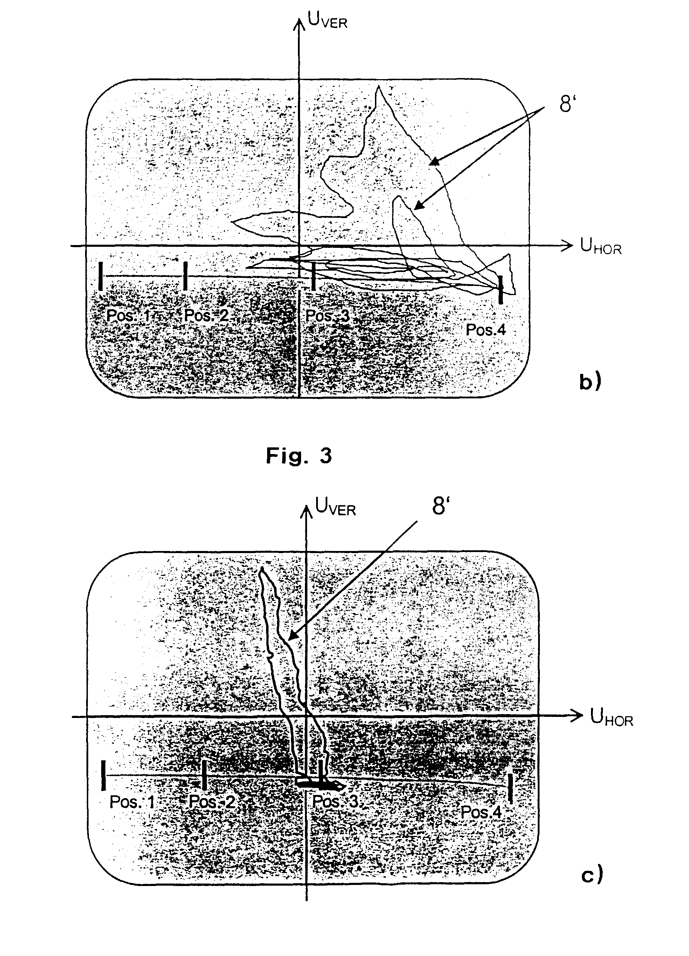

In Fig. 3a ist der Wirbelstromsensor 1 gegenüber dem Prüfgut 2 dargestellt, während er lateral über die Oberfläche des Prüfgutes 2 bewegt wird. Die Bewegung erfolgt in unterschiedlichen Abständen, die jeweils durch die Positionen 1 bis 4 gekennzeichnet sind. Im Prüfgut 2 ist ein Riß 8 vorgesehen, der zu den in den Fig. 3b und c dargestellten Meßsignalverläufen führt.

In Fig. 3b ist in komplexer Darstellungsebene die Signalortskurve des Wirbelstromsensors 1 aufgezeichnet, die durch mehrfaches Überfahren des Wirbelstromsensors über den Riß 8 mit unterschiedlichem Abstand von der Oberfläche des Prüfgutes 2 und nachfolgendem Abhebevorgang erhalten wird. In der komplexen Darstellung sind von Geometriesignalen überlagerte Risssignale 8' in der Signalortskurve zu erkennen.

In Fig. 3c ist die komplexe Darstellung einer selektiven Signalauslesung der Messsignale dargestellt. Hierbei wird der Wirbelstromsensor in gleicher Weise bewegt wie in Figur 3 b, die Signalauslesung erfolgt jedoch selektiv nur im Bereich der Position 3. Die in Fig. 3c dargestellte Signalortskurve 8' entspricht der ungestörten Siganlortskurve des Risses 8.

Die damit verbundene Unterdrückung der Geomtriesignale stellt die angestrebte Verbesserung des Nutz-/Strörverhältnisses dar.

Zur weiteren Verbesserung der Messgenauigkeit werden zwecks Unterdrückung von Schwankungen der Messeinrichtung in definierten Zeitabständen jeweils an mindestens einem Bezugskörper Referenzsignale aufgenommen, beispielsweise die Signalverläufe M1 und M3 in Fig. 2b, die dann bei der Signalauswertung zur rechnerischen Korrektur in der komplexen Darstellungsebene verwendet werden .

In analoger Weise und zum gleichen Zweck wird zu jedem Messsignal an mindestens einem Bezugskörper ein Referenzsignal aufgenommen und vom Rechner bei der Signalverarbeitung verwendet.

### Bezugszeichenliste

- 1: Sonde
- 2: Prüfgut
- 3: Wirbelstromgerät
- 4: A/D-Wandler
- 5: Rechner, Auswerteeinheit
- 6: elektrisch leitfähige Schicht
- 7: Auswertelinie
- 8: Riß
- 8': Rißsignal

## Patentansprüche

1. Verfahren zur Oberflächenuntersuchung an einem, wenigstens eine elektrisch leitfähige Schicht (6) aufweisenden Prüfgut (2) unter Verwendung eines Wirbelstromsensors (1), der ein magnetisches Wechselfeld erzeugt, dem das Prüfgut (2) ausgesetzt wird, und dessen Meßsignale einer Auswerteeinheit (5) zugeleitet werden, dadurch **gekennzeichnet,** daß der Wirbelstromsensor (1) auf die Oberfläche des Prüfguts (2) aufgesetzt und von der Oberfläche des Prüfgutes (1) abgehoben wird, und
daß die während des Aufsetz- und/oder des Abhebevorganges am Wirbelstromsensor (1) auftretenden Meßsignale in der Auswerteeinheit (5) zur weiteren Verarbeitung gespeichert und zur Auswertung herangezogen werden.

2. Verfahren nach Anspruch 1,
dadurch **gekennzeichnet,** daß der Aufsetzvorgang ein Absenken des Wirbelstromsensors (1) von einer bestimmten, von der Oberfläche des Prüfgutes (2) beabstandeten Position bis maximal zum Oberflächenkontakt umfaßt und der Abhebevorgang den umgekehrten Bewegungsvorgang entspricht.

3. Verfahren nach Anspruch 1 oder 2,
dadurch **gekennzeichnet,** daß die Meßsignale getriggert erfaßt werden, damit eine zeitaufgelöste Meßsignalerfassung möglich ist.

4. Verfahren nach einem der Ansprüche 1 bis 3,
dadurch **gekennzeichnet,** daß die Meßsignale ortsaufgelöst unter Verwendung einer ortsauflösenden Einheit erfaßt werden.

5. Verfahren nach einem der Ansprüche 1 bis 4,
dadurch **gekennzeichnet,** daß zur Meßsignalauswertung die Meßsignale in zwei Signalkomponenten zerlegt werden und in einem zweidimensionalen Koordinatensystem dargestellt werden.

6. Verfahren nach einem der Ansprüche 1 bis 5,
dadurch **gekennzeichnet,** daß zur Auswertung ausschließlich Meßsignale herangezogen werden, die in einem definierten Zeitfenster liegen, das durch ein Start- und Stop-Triggersignal begrenzt ist.

7. Verfahren nach einem der Ansprüche 1 bis 5,
dadurch **gekennzeichnet,** daß zur Auswertung ausschließlich Meßsignale herangezogen werden, die einer bestimmten geometrische Sensorposition relativ zum Prüfgut zugehören.

8. Verfahren nach Anspruch 6 oder 7,
dadurch **gekennzeichnet,** daß zur Auswertung ausschließlich Meßsignale herangezogen werden, die möglichst geringen oder keinen Fehlern durch Störungen unterliegen.

9. Verfahren nach einem der Ansprüche 1 bis 8,
dadurch **gekennzeichnet,** daß Referenzwerte erfaßt werden, durch die Kompensationen beim Auftreten von Störungen durchgeführt und/oder Kalibrierungen vorgenommen werden.

10. Verfahren nach einem der Ansprüche 1 bis 9,
dadurch **gekennzeichnet,** daß zwischen dem Aufsetz- und Abhebevorgangs der Wirbelstromsensor (1) entlang der Oberfläche des Prüfguts (2) bewegt wird und daß die dabei erfaßten Meßsignale in der Auswerteeinheit (5) gespeichert und ausgewertet werden.

11. Verfahren nach einem der Ansprüche 1 bis 10,
dadurch **gekennzeichnet,** daß der Wirbelstromsensor (1) manuell oder automatisiert auf die Oberfläche des Prüfguts (2) aufgesetzt und von dieser abgehoben wird, und daß der Aufsetz- und Abhebevorgang vielfach wiederholt wird.

12. Verfahren nach einem der Ansprüche 1 bis 11,
dadurch **gekennzeichnet,** daß in definierten Zeitabständen jeweils an mindestens einem Bezugskörper Referenzsignale aufgenommen und bei der Signalauwertung zur rechnerischen Korrektur in einer komplexen Darstellungsebene verwendet werden.

13. Verfahren nach einem der Ansprüche 1 bis 12,
dadurch **gekennzeichnet,** daß zu jedem Messsignal an mindestens einem Bezugskörper ein Referenzsignal aufgenommen und von der Auswerteeinheit bei der Signalverarbeitung verwendet wird.

14. Verwendung des Verfahrens nach einem der Ansprüche 1 bis 13 zur Schichtdickenbestimmung von elektrisch leitfähigen Schichten (6) auf einem Prüfgut (2) und/oder zur Bestimmung der Oberflächengüte des Pürfgutes (2), wie Rauheit oder Rißbildung an der Oberfläche.
